# EUROPÄISCHE PATENTSCHRIFT

(11) **EP 1 549 838 B1**
(45) Veröffentlichungstag und Bekanntmachung des Hinweises auf die Patenterteilung: **28.02.2007**
(21) Anmeldenummer: 03761529.1
(22) Anmeldetag: 26.06.2003
(51) Int. Cl.: F01N 3/037, F01N 3/021, F01N 3/28, B01D 46/24

(54) **ZENTRIFUGE, INSBESONDERE ZUR ABSCHEIDUNG VON RUSS AUS EINEM ABGASSTROM EINER BRENNKRAFTMASCHINE**
CENTRIFUGE, IN PARTICULAR FOR SEPARATING THE SOOT FROM AN EXHAUST GAS FLOW OF AN INTERNAL COMBUSTION ENGINE
CENTRIFUGEUSE, EN PARTICULIER POUR EXTRAIRE LA SUIE D'UN FLUX DE GAZ D'ECHAPPEMENT D'UN MOTEUR A COMBUSTION INTERNE

(30) Priorität: 27.06.2002 DE 10228682
(43) Veröffentlichungstag der Anmeldung: 06.07.2005
(73) Patentinhaber: MANN+HUMMEL GmbH, 71638 Ludwigsburg (DE)
(72) Erfinder: SEIPLER, Dieter, 71229 Leonberg (DE)
(86) Internationale Anmeldenummer: PCT/EP2003/006781
(87) Internationale Veröffentlichungsnummer: WO 2004/003354

(56) Entgegenhaltungen:
- EP-A- 0 220 505
- EP-A- 0 515 776
- WO-A-02/34407
- FR-A- 2 701 513

## Beschreibung

### Stand der Technik

Die Erfindung betrifft eine Zentrifuge, insbesondere zur Abscheidung von Ruß aus einem Abgasstrom einer Brennkraftmaschine.

Aus der DE 38 30 761 ist ein Zentrifugalabscheider für Rußpartikel bekannt, wobei die Rußpartikel sich an einer äußeren Umfangsfläche eines Gehäuses anlagern. Dort sind Heizelemente angeordnet zur Verbrennung der Rußpartikel. Als Antrieb, d. h. als Fliehkraftantrieb wird das Turbinenlaufrad der Abgasturbine genutzt.

Es ist weiterhin aus der DE 10 39 997 eine Zentrifuge mit Propellern bekannt, wobei im Inneren der Zentrifuge Mitführungsrippen angeordnet sind und Schlitze zum Ausschleudern der Verunreinigungen, d. h. der abgeschiedenen Partikel.

Die US-PS 1,434,562 beschreibt einen Zentrifugalseparator für die Ansaugluft einer Brennkraftmaschine mit einem Tellerabscheider, an welchem das Gas umgeleitet wird und eine Abscheidung der Partikel erfolgt. Der Tellerabscheider wird angetrieben von einem als Eigenantrieb aufgebauten Windrad, das ausgangsseitig angeordnet ist.

Bekannt ist ebenfalls ein Rußfilter mit einem Keramikkörper, welcher die Rußpartikel aufnimmt. Zur Regenerierung wird ein Additiv verwendet, welches die Zündtemperatur herabsetzt und ein Abbrennen des Keramikkörpers ermöglicht.

Es ist femer aus der GB 1465820 A eine Zentrifuge zum Abscheiden von Ruß aus einem Abgasstrom einer Brennkraftmaschine bekannt. Diese weist einzelne Platten auf, welche perforiert sind oder Öffnungen besitzen. Das über eine Öffnung zugeführte Abgas strömt im Wesentlichen ohne Strömungsumkehr durch den Abscheider. Die im Abgas vorhandenen Partikel werden über radial angeordnete Platten nach außen geschleudert.

Es ist weiterhin ein System bekannt, bei dem das Abgas abgelenkt und die Partikel in einer Metallmatte festgehalten werden. Dieses Filtersystem kann zwar nicht verstopfen und die Regenerierung ist bei hohen Temperaturen aufgrund der Beständigkeit des Mediums möglich, es besteht jedoch die Gefahr, dass ein Teil der Partikel ungehindert durch dieses System gelangen und ausströmen können.

Die beschriebenen und bekannten Einrichtungen zum Abscheiden von Partikeln sind aufwendig in der Herstellung und benötigen teilweise zum Abbrennen der Partikel zusätzliche Einrichtungen wie z. B. Heizeinrichtungen.

### Vorteile der Erfindung

Der Erfindung liegt die Aufgabe zugrunde, eine Zentrifuge zu schaffen, welche einfach aufgebaut ist, keine zusätzlichen Einrichtungen zum Abbrennen des Rußes benötigt und einen hohen Wirkungsgrad aufweist. Diese Aufgabe wird durch die Merkmale des unabhängigen Anspruchs 1 gelöst.

Der wesentliche Vorteil der Zentrifuge liegt darin, dass sie unmittelbar in der Rohrleitung eines Abgasstranges eingebaut ist, einen eigenen Antrieb aufweist in Form von Antriebsschaufeln, welche eingangsseitig angeordnet sind, und wobei die Abscheidung aufgrund der Fliehkraftwirkung erfolgt und die Strömung zur Ausgangsseite umgeleitet wird.

Die Erfindung sieht vor, dass eine Vielzahl von Strömungsumkehreinrichtungen in Form von kegelförmigen Ringen vorgesehen ist. Damit lässt sich die Zentrifuge nach Art eines Tellerseparators gestalten, welcher bei einem hohen Luftdurchsatz eine hohe Abscheideleistung realisiert.

Eine Ausgestaltung der Erfindung sieht vor, die zylindrische Gehäuseinnenwand des Drehkörpers mit einer Beschichtung oder einer Aufrauhung zu versehen, welche die Anfangshaftung begünstigt und das Anhaften des Rußes verbessert.

Es wird weiterbildungsgemäß vorgeschlagen, die Gehäuseinnenwand mit einer katalytischen Beschichtung zu versehen, welche die Zündtemperatur des Rußes herabsetzt. Diese katalytische Beschichtung kann sowohl aus Silbervanadat oder aus Kupfervanadat, welches Alkalimetalle enthält, bestehen. Damit lässt sich die Zündtemperatur des Rußes bzw. der Rußpartikel beträchtlich, d. h. bis auf 365° C herabsetzen.

Weiterbildungsgemäß wird vorgeschlagen, zur einfachen Lagerung der Zentrifuge im Rohgaseinlassrohr ein erstes Lager und im Reingasauslassrohr ein zweites Lager anzuordnen und die Zentrifuge über diese beiden Lagerstellen im Abgasstrang zu befestigen. Durch diesen Aufbau lässt sich eine Inline-Zentrifuge gestalten, die im Bereich einer Anschlussstelle im Abgasstrang vorgesehen ist bzw. ein öffenbares Gehäuse besitzt, welches in den Abgasstrang integriert ist.

Zum Abbrennen des Rußes, d. h. zur Regenerierung besteht auch die Möglichkeit, das Abgas mit NOx anzureichern, um damit in Verbindung mit den weiteren Maßnahmen zu einer raschen und zuverlässigen Abreinigung zu gelangen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1a: eine Schnittdarstellung durch eine Zentrifuge
- Figur 1b: die in Figur 1a gezeigte Zentrifuge in einer 3D-Ansicht
- Figur 2a: eine Schnittdarstellung durch eine alternativ ausgestaltete Zentrifuge
- Figur 2b: eine dreidimensionale Ansicht der in Figur 2a gezeigten Zentrifuge
- Figur 3: eine weitere Schnittdarstellung der in Figur 2a gezeigten Zentrifuge
- Figur 4a: eine Schnittdarstellung einer Zentrifuge mit einer Antriebsturbine
- Figur 4b: eine dreidimensionale Ansicht der in Figur 4a gezeigten Zentrifuge

### Beschreibung der Ausführungsbeispiele

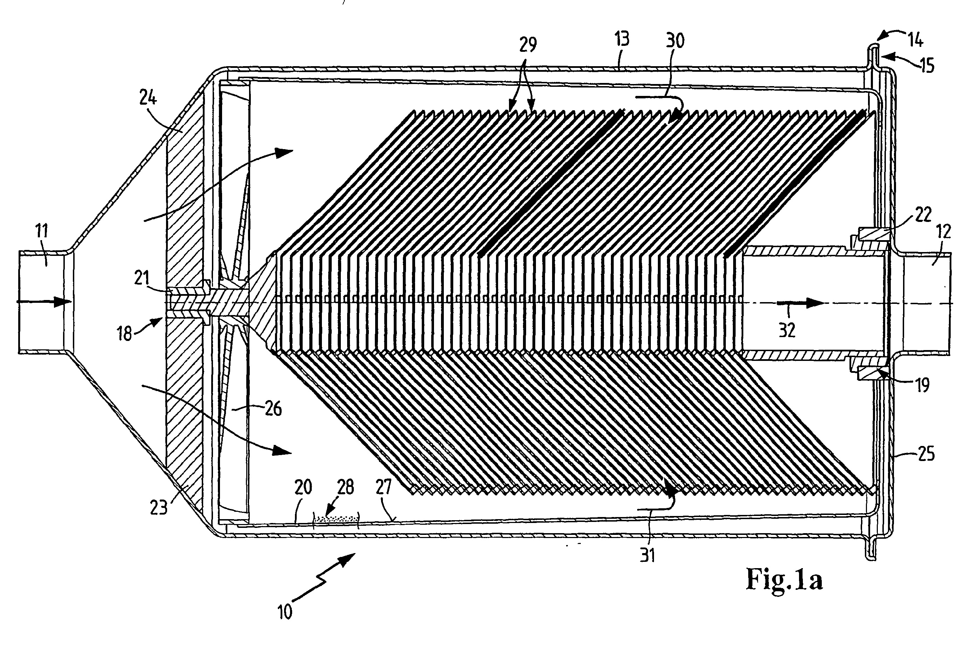

Figur 1a zeigt eine Rußzentrifuge 10, welche als Inline-Zentrifuge gestaltet ist und zwischen Rohgaseinlassrohr 11 und Reingasauslassrohr 12 angeordnet ist. Die Zentrifuge befindet sich in einem Gehäuse 13, welches unmittelbar mit Rohgaseinlassrohr und Reingasauslassrohr verbunden ist und eine Flanschverbindung 14 aufweist, die mit einem geeigneten Verschlusssystem 15 versehen ist. Sowohl am Rohgaseinlass als auch am Reingasauslass sind konzentrische Lager 18, 19 vorgesehen, welche den Zentrifugenrotor 20 tragen. Die Lagerung ist zweckmäßigerweise eine Gleitlagerung mit Keramikbuchsen 21, 22, welche hochtemperaturbeständig sind. Das Lager 18 ist an Stegen 23, 24 befestigt, das Lager 19 ist an einem Gehäusedeckel 25 angeordnet.

Die Zentrifuge besitzt auf der Gaseinlassseite Antriebsschaufein 26, durch welche beim Einströmen des Abgases der Zentrifugenrotor in Rotation versetzt wird. Die Zentrifuge selbst ist im wesentlichen ein Drehkörper, an dessen Gehäuseinnenwand 27 sich der abgeschiedene Ruß 28 absetzen kann. Die Zentrifuge weist ferner Strömungsumkehreinrichtungen in Form von Tellerscheiben 29 auf, welche eine Strömungsumkehr des Abgases bewirken. Ausgangsseitig ist die Zentrifuge zum Reingasauslassrohr geöffnet und kann dort unter Umständen auch mit Antriebsschaufeln versehen sein. Die Anzahl der Tellerscheiben 29 richtet sich nach dem Abscheidegrad bzw. der Abscheidewirkung und kann variabel gestaltet sein. Unter Umständen genügt eine geringe Anzahl von Tellerscheiben, um den gewünschten Effekt zu erzielen.

Das ungereinigte Abgas strömt über das Rohgaseinlassrohr 11 in den äußeren Bereich der Zentrifuge, wird dort in Rotation versetzt, so dass sich über die Fliehkraft die Rußpartikel an der Gehäuseinnenwand 27 anlagern. Anschließend strömt das Abgas gemäß den Pfeilen 30, 31 in den inneren Bereich des Zentrifugenrotors und erfährt dort eine Strömungsumkehr und wird zum Reingasauslassrohr gemäß Pfeil 32 geleitet.

Zur Unterstützung der Anhaftung von Rußpartikeln an der Gehäuseinnenwand 27 kann diese aufgerauht sein. Zur Verbesserung der Abbrenneigenschaften ist diese katalytisch beschichtet. Ein Austausch der gesamten Zentrifuge ist durch ein Öffnen der Flanschverbindung 14 relativ problemlos möglich.

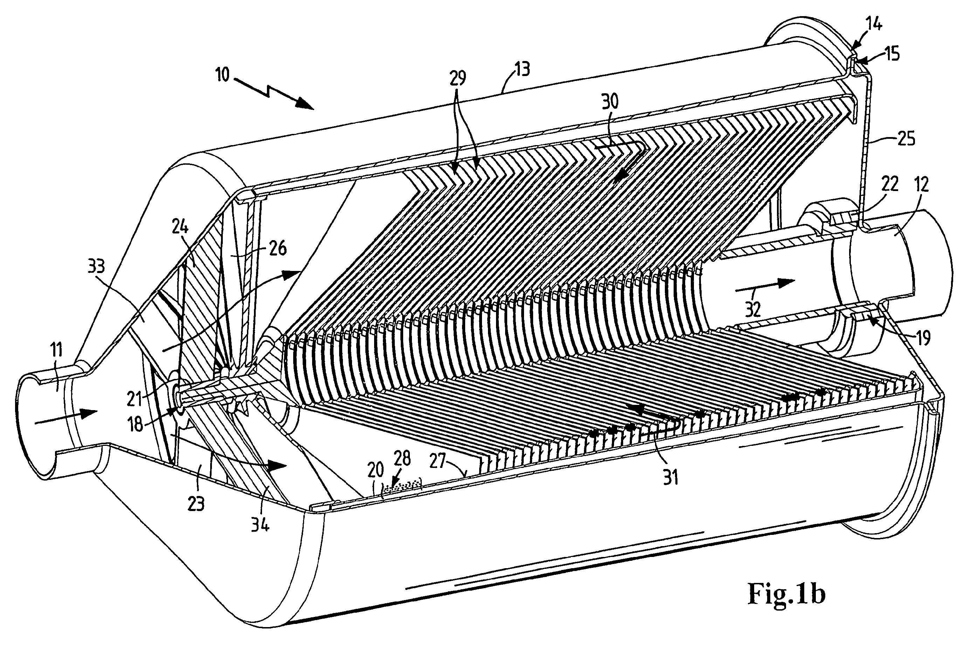

Die dreidimensionale Darstellung in Figur 1 b zeigt nochmals deutlich den Antrieb über die Antriebsschaufeln 26 sowie die Fixierung des Lagers bzw. der Keramikbuchse 21 über vier Stege 23, 24, 33, 34. Gleiche Teile sind mit gleichen Bezugszeichen versehen.

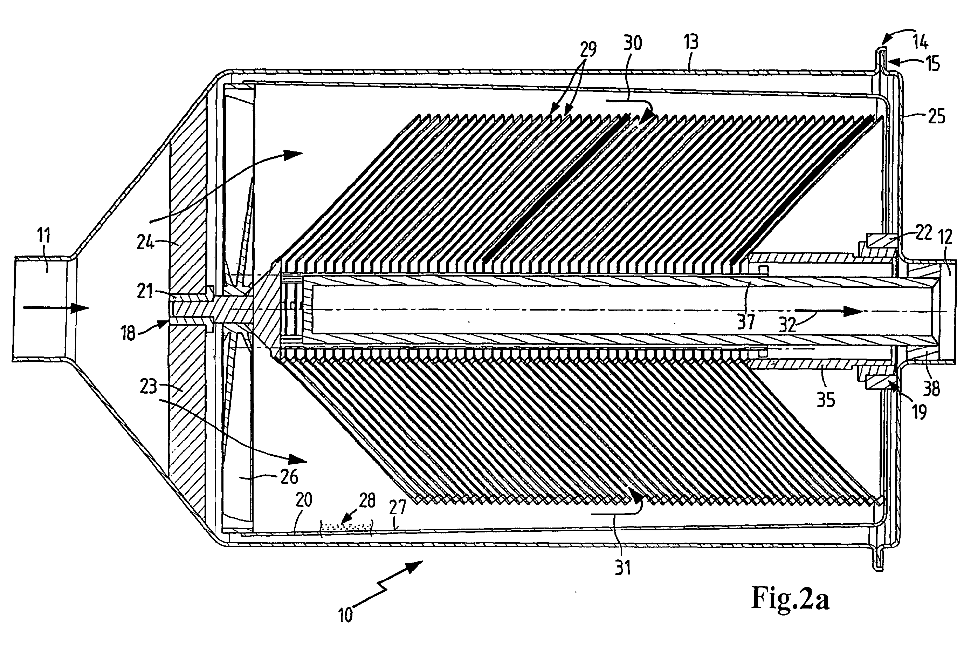

Die Figur 2a zeigt die Variante einer Rußzentrifuge mit einer Ergänzung. Zur Vermeidung von Wiederholungen, wird auf die Beschreibung der Figur 1b verwiesen. Der Unterscheid zu der in Figur 1 b gezeigten Zentrifuge liegt darin, dass sich in dem Reingasrohr 35, welches durch die Öffnungen der einzelnen Teller gebildet wird bzw. zum Reingasauslassrohr gewandt durch einen Rohrstutzen 35. In diesem befindet sich stationär angeordnet eine Filterkerze 37. Diese Filterkerze besteht beispielsweise aus einem Metallvlies, das auf einem Stützkörper angeordnet ist. Die Filterkerze ist am Reingasanschlussrohr 12 über eine Flanschverbindung 38 befestigt. Die Filterkerze 37 hat die Aufgabe, unter bestimmten Betriebszuständen, d. h. beispielsweise vor dem Anlaufen der Zentrifuge, den Ruß im Abgas abzufiltern. Dieser Ruß lagert sich an der Oberfläche der Filterkerze an. Um ein Ansammeln von Ruß auf der Filterkerze zu vermeiden, ist eine Abreinigungsvorrichtung vorgesehen. Die Abreinigung erfolgt über eine Luftverwirbelung, die dazu führt, dass im Betriebszustand der Zentrifuge der Ruß auf die Tellerscheiben zurücktransportiert wird und von dort zu der Gehäuseinnenwand 27 gelangt.

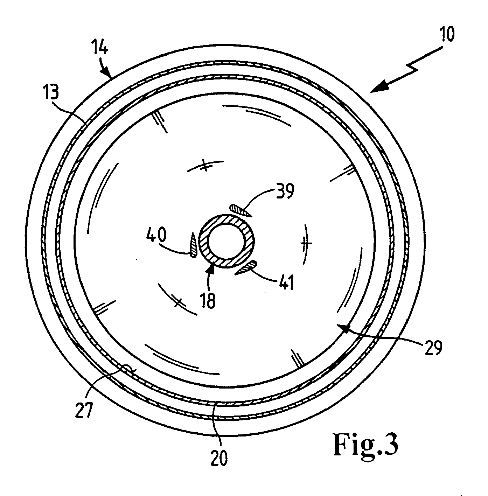

Zur Abreinigung sind, wie in Figur 3 gezeigt, am Umfang der Filterkerze verteilt angeordnet drei Flügel 39, 40, 41 vorgesehen. Diese Flügel drehen sich mit der Zentrifuge, d. h. sie sind an der inneren Öffnung der Tellerscheiben angeordnet und weisen einen geringen Abstand zu der Filterkerze 37 auf. Durch diese Flügel wird die Wirbelströmung erzeugt, welche den Ruß von der Filterkerze 37 entfernt und nach außen abträgt.

Wie in Figur 3 gezeigt, ist der Abstand der Tellerscheiben 29 zu der Gehäuseinnenwand 27 äußerst gering. Der relativ große Durchmesser der Tellerscheiben 29 verbessert den Abscheidegrad der Rußzentrifuge.

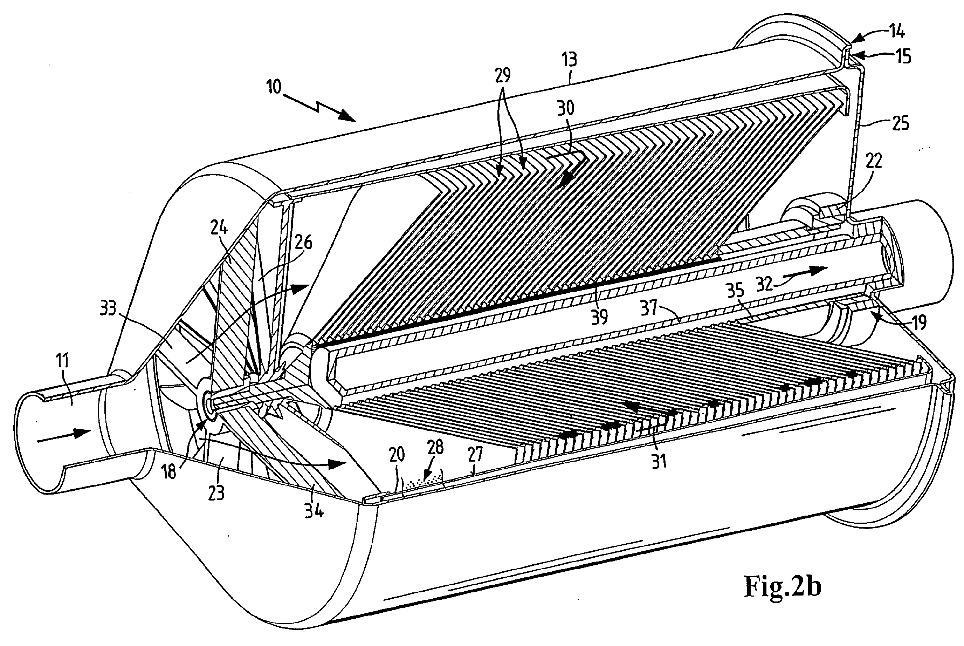

Figur 2b zeigt wiederum eine dreidimensionale Darstellung der in Figur 2a in Schnittdarstellung abgebildeten Rußzentrifuge. Die Filterkerze 37 und deren Lage im Reingasrohr ist deutlich zu erkennen. Zu erkennen ist ebenfalls der Flügel 39, welcher an den Tellerscheiben befestigt ist und nur einen geringen Abstand zu der Filterkerze 37 aufweist.

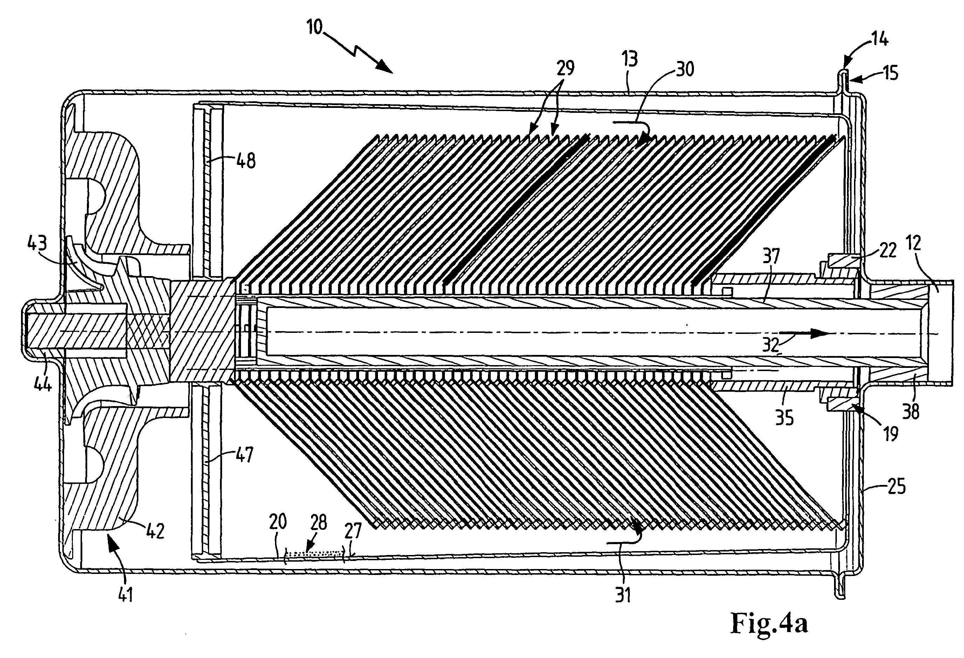

Figur 4a zeigt eine Rußzentrifuge, bei welcher der Antrieb über eine Turbine 41 erfolgt. Die Turbine besteht aus dem Turbinengehäuse 42 sowie dem Turbinenlaufrad 43. Das Laufrad ist in einer Gleitlagerbuchse 44 gelagert und mit dem Turbinenrotor verbunden.

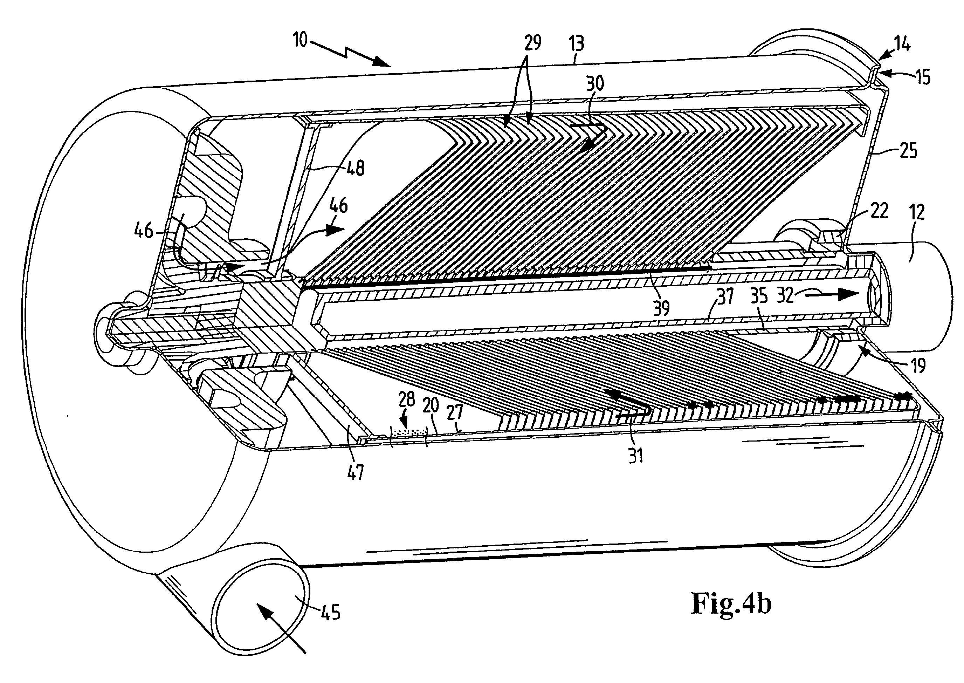

Beim Einströmen des rußbehafteten Abgases über den in Figur 4b gezeigten tangential angeordneten Rohgaseintritt 45 versetzt die Turbine den Rußabscheider in Drehung, das Rohgas strömt durch die Turbine gemäß Pfeil 46 an den Stegen 47, 48 vorbei in den Innenraum des Zentrifugenrotors. Auch diese Zentrifuge ist mit einer zusätzlichen Filterkerze zum Reinigen des Gases in bestimmten Betriebszuständen der Zentrifuge ausgestattet.

## Patentansprüche

1. Zentrifuge (10) zum Abscheiden von Ruß aus einem Abgasstrom einer Brennkraftmaschine, welche als Inlinezentrifuge gestaltet ist, wobei ein Rohgaseinlassrohr (11) und ein Reingasauslassrohr (12) vorgesehen ist und die Zentrifuge (10) im Wesentlichen konzentrisch zu Einlass- und Auslassrohr (11, 12) angeordnet ist und aus einem an beiden Stirnseiten offenen Drehkörper besteht, der einlassseitig Antriebsschaufeln (26) zum Antrieb der Zentrifuge (10) aufweist, durch welche beim Einströmen des Abgases der Zentrifugenrotor (20) in Rotation versetzt wird und innerhalb des Drehkörpers eine Vielzahl von Strömungsumkehreinrichtungen in Form von kegelförmigen Ringen (29) vorgesehen ist.

2. Zentrifuge nach Anspruch 1, wobei der Drehkörper eine zylindrische Gehäuseinnenwand (27) aufweist, welche eine Beschichtung zum Anhaften des Rußes aufweist.

3. Zentrifuge nach Anspruch 2, wobei die Gehäuseinnenwand (27) eine katalytische Beschichtung aufweist, welche die Zündtemperatur des Rußes herabsetzt.

4. Zentrifuge nach Anspruch 3, wobei die katalytische Beschichtung aus Silbervanadat oder Kupfervanadat besteht, welches Alkalimetall enthält.

5. Zentrifuge nach einem der vorherigen Ansprüche, wobei im Rohgaseinlassrohr (11) ein erstes Lager (18) und im Reingasauslassrohr (12) ein zweites Lager (19) vorgesehen ist und die Zentrifuge über eine Lagerwelle durch beide Lager gehalten ist.

6. Zentrifuge nach Anspruch 1, wobei diese in einem öffenbaren Gehäuse angeordnet ist.

7. Zentrifuge nach einem der vorherigen Ansprüche, wobei zur Regenerierung eine NOx-Anreicherung des Abgases vorgesehen ist.

8. Zentrifuge nach einem der vorherigen Ansprüche, wobei innerhalb des Drehkörpers eine Filterkerze (37) feststehend angeordnet ist, welche insbesondere aus einem Metallvlies mit einem Stützkörper besteht.

9. Zentrifuge nach Anspruch 9, wobei zur Abreinigung der Filterkerze (37) wenigstens ein an den kegelförmigen Ringen (29) befestigter und sich mit diesen drehender Flügel vorgesehen ist, welcher eine Aufwirbelung des an der Filterkerze (37) anhaftenden Rußes bewirkt und sich damit der Ruß an der Gehäuseinnenwand (27) anlagert.

## Claims

1. Centrifuge (10) for separating soot from an exhaust gas flow of an internal combustion engine, the said centrifuge being in the form of an in-line centrifuge, wherein an unfiltered gas inlet tube (11) and a filtered gas outlet tube (12) are provided and the centrifuge (10) is disposed substantially concentrically relative to the inlet tube and the outlet tube and comprises a rotating body that is open at both end faces and includes drive blades (26) on the inlet side for the driving of the centrifuge, by means of which drive blades, when the exhaust gas flows in, the centrifuge rotor (20) is set into rotation, and a plurality of flow reversing devices in the form of conical rings (29) is provided internally of the rotating body.

2. Centrifuge according to claim 1, wherein the rotating body includes a cylindrical housing inside wall (27), which includes a coating to which the soot will adhere.

3. Centrifuge according to claim 2, wherein the housing inside wall (27) includes a catalytic coating, which reduces the ignition temperature of the soot.

4. Centrifuge according to claim 3, wherein the catalytic coating is produced from either silver vanadate or copper vanadate, which includes alkali metal.

5. Centrifuge according to one of the preceding claims, wherein a first bearing (18) is provided in the unfiltered gas inlet tube (11) and a second bearing (19) is provided in the filtered gas outlet tube (12) and the centrifuge is retained by the two bearings via a bearing shaft.

6. Centrifuge according to claim 1, wherein the said centrifuge is disposed in an openable housing.

7. Centrifuge according to one of the preceding claims, wherein exhaust gas is enriched with NOx for regeneration.

8. Centrifuge according to one of the preceding claims, wherein a filter candle (37) is disposed in a stationary manner internally of the rotating body, the said filter candle being produced more especially from a nonwoven metal fabric with a supporting body.

9. Centrifuge according to claim 9, wherein for dusting-down the filter candle (37) there is provided at least one blade that is secured to the conical rings (29) and rotates with the said rings, the said blade effecting a swirling of the soot that is clinging to the filter candle (37) and, consequently, causing the soot to be deposited on the inside wall (27) of the housing.

## Revendications

1. Centrifugeuse (10) pour extraire la suie d'un flux de gaz d'échappement d'un moteur à combustion interne, conçue en tant que centrifugeuse en ligne, un tuyau d'admission de gaz brut (11) et un tuyau de décharge de gaz purifié (12), et la centrifugeuse (10) étant essentiellement concentrique aux tuyaux d'admission et de décharge (11, 12) et se composant d'un corps rotatif ouvert sur les deux faces frontales, qui présente des ailettes d'entraînement (26) côté admission vers l'entraînement de la centrifugeuse (10) qui met le rotor de centrifugeuse (20) en rotation lors de l'afflux des gaz d'échappement et un grand nombre de dispositifs d'inversion d'écoulement étant prévu sous la forme d'anneaux coniques (29) dans le corps rotatif.

2. Centrifugeuse selon la revendication 1, dans laquelle le corps rotatif présente une paroi intérieure de boîtier cylindrique (27) comportant un revêtement pour l'adhérence de la suie.

3. Centrifugeuse selon la revendication 2, dans laquelle la paroi intérieure du boîtier (27) présente un revêtement catalytique abaissant la température d'allumage de la suie.

4. Centrifugeuse selon la revendication 3, dans laquelle le revêtement catalytique se compose de vanadate d'argent et de vanadate de cuivre comportant des métaux alcalins.

5. Centrifugeuse selon l'une des revendications précédentes, dans laquelle un premier palier (18) est placé dans le tuyau d'admission de gaz brut (11) et un deuxième palier (19) dans le tuyau de décharge de gaz purifié (12) la centrifugeuse étant maintenue par les deux paliers par l'intermédiaire d'un axe de palier.

6. Centrifugeuse selon la revendication 1, laquelle centrifugeuse est placée dans un boîtier ouvrable.

7. Centrifugeuse selon l'une des revendications précédentes, dans laquelle un enrichissement en Nox des gaz d'échappement est prévu pour la régénération.

8. Centrifugeuse selon l'une des revendications précédentes, dans laquelle une bougie filtrante (37) se compose notamment d'un non-tissé métallique avec un corps d'appui fixé dans le corps rotatif.

9. Centrifugeuse selon la revendication 9,
**caractérisée en ce que**
pour le nettoyage de la bougie filtrante (37), au moins une aile fixée sur les anneaux coniques (29), tourne avec eux entraînant un tourbillonnement de la suie adhérant à la bougie filtrante (37) ce qui conduit à une accumulation de suie sur la paroi intérieure du boîtier (27).
